# EUROPÄISCHE PATENTSCHRIFT

(11) **EP 1 460 258 B1**
(45) Veröffentlichungstag und Bekanntmachung des Hinweises auf die Patenterteilung: **17.05.2006**
(21) Anmeldenummer: 04006295.2
(22) Anmeldetag: 17.03.2004
(51) Int. Cl.: F02K 9/97

(54) **Ausfahrbare Schubdüsenglocke für ein Raketentriebwerk**
Deployable rocket engine nozzle
Tuyère déployable d'un moteur de fusée

(30) Priorität: 21.03.2003 DE 10312776
(43) Veröffentlichungstag der Anmeldung: 22.09.2004
(73) Patentinhaber: EADS Space Transportation GmbH, 28199 Bremen (DE)
(72) Erfinder: Roth, Martin, 82024 Taufkirchen (DE); Sperber, Franz, 83059 Kolbermoor (DE)
(74) Vertreter: Ulrich, Thomas

(56) Entgegenhaltungen:
- EP-A- 0 661 436
- EP-B- 0 516 519
- FR-A- 2 622 931
- RU-C- 2 044 150

## Beschreibung

Die Erfindung betrifft ein Raketentriebwerk eines Luft- oder Raumfahrzeugs mit einer ausfahrbaren Schubdüsenglocke nach dem Oberbegriff des Anspruchs 1.

Aus der EP 0 516 519 B1 ist eine ausfahrbare Schubdüsenglocke für ein Raketentriebwerk eines Luft- oder Raumfahrzeugs bekannt, welche einen am Motor des Raketentriebwerks fest angeordneten ersten Teil quasi-konischer Form mit kleineren Durchmesser und einen gegenüber diesem ersten Teil beweglich angeordneten zweiten Teil quasi-konischer Form mit größerem Durchmesser umfasst. Der zweite Teil der Schubdüsenglocke ist in einer bezüglich der Flugrichtung vorderen Stauposition den ersten Teil umgebend näher am Raketenmotor befindlich und in einer bezüglich der Flugrichtung hinteren Betriebsposition den zweiten Teil in seiner Form fortsetzend weiter vom Raketenmotor weg angeordnet. Zum Ausfahren des zweiten Teils der Schubdüsenglocke aus der Stauposition in die Betriebsposition ist ein Ausfahrmechanismus vorgesehen, der mehrere über den Umfang der Schubdüsenglocke verteilte schwenkbare Auslegerarme umfasst, die zwischen den ersten Teil und den zweiten Teil der Schubdüsenglocke gekoppelt und an einem ersten Ende mit einer an der Außenseite des ersten Teils der Schubdüsenglocke vorgesehenen Supportstruktur gelenkig verbunden sind. Bei der bekannten Schubdüsenglocke sind die Auslegerarme um eine in Umfangsrichtung der Schubdüsenglocke vorgesehne Drehachse an der an dem ersten Teil der Schubdüsenglocke angebrachten Supportstruktur in einer die Längsachse des Raketentriebwerks enthaltenden Radialebene schwenkbar gelagert und an ihrem zweiten Ende drehbar mit einer Verbindungsstange gekoppelt, die ihrerseits mit dem anderen Ende drehbar mit einem im Bereich des vorderen Endes des zweiten Teils der Schubdüsenglocke an dessen Außenseite vorgesehenen Kraftangriffspunkt drehbar gekoppelt ist. Die Auslegerarme haben in der die Längsachse des Raketentriebwerks enthaltenden Radialebene eine zum vorderen Ende des zweiten Teils der Schubdüsenglocke hin bogenförmig gekrümmte Form, welche beim Ausfahren des zweiten Teils der Schubdüsenglocke eine das vordere Ende desselben umgreifende Schwenkbewegung über einen bestimmten Winkelbereich gestattet.

Aus der US 4 313 567 und der US 4 383 407 sind ausfahrbare Schubdüsenglocken für ein Raketentriebwerk eines Luft- oder Raumfahrzeugs bekannt, welche in ähnlicher Weise einen fest angeordneten ersten Teil quasi-konischer Form mit kleineren Durchmesser und einen gegenüber diesem ersten Teil beweglich angeordneten zweiten Teil quasi-konischer Form mit größerem Durchmesser umfassen. Zum Ausfahren des zweiten Teils der Schubdüsenglocke aus einer bezüglich der Flugrichtung vorderen Stauposition in eine bezüglich der Flugrichtung hintere Betriebsposition ist ein Ausfahrmechanismus vorgesehen, der mehrere über den Umfang der Schubdüsenglocke verteilt angeordnete, zwischen den ersten und den zweiten Teil der Schubdüsenglocke gekoppelte Spindelstreben umfasst. Diese Spindelstreben sind parallel zur Längsachse des Raketentriebwerks angeordnet und durch einen Drehantrieb antreibbar, so dass bei deren Drehung der zweite Teil der Schubdüsenglocke parallel zur Längsachse des Raketentriebwerks nach hinten ausgefahren wird.

Die Aufgabe der Erfindung ist es ein Raketentriebwerk mit einer ausfahrbaren Schubdüsenglocke mit einem möglichst einfach aufgebauten, zuverlässig arbeitenden Ausfahrmechanismus möglichst geringer Masse zu schaffen.

Diese Aufgabe wird erfindungsgemäß durch ein Raketentriebwerk mit einer ausfahrbaren Schubdüsenglocke mit den Merkmalen des Anspruchs 1 gelöst.

Vorteilhafte Weiterbildungen der erfindungsgemäßen ausfahrbaren Schubdüsenglocke sind in den Unteransprüchen gekennzeichnet.

Vorzugsweise ist es vorgesehen, dass die Auslegerarme an ihrem dem zweiten Teil der Schubdüsenglocke zugewandten zweiten Ende ein Gleit- oder Rollelement aufweisen, welches beim Ausfahren des zweiten Teils der Schubdüsenglocke unter Heranschwenken der Auslegerarme für eine Gleit- oder Rollbewegung gegenüber der Innenseite des zweiten Teils der Schubdüsenglocke vorgesehen ist.

Vorzugsweise sind die Auslegerarme an ihrem ersten Ende um eine in Umfangsrichtung der Schubdüsenglocke verlaufend angeordnete Gelenkachse gelagert und in einer die Längsachse des Raketentriebwerks enthaltenden Radialebene schwenkbar.

Gemäß einer bevorzugten Ausführungsform des erfindungsgemäßen Raketentriebwerks mit ausfahrbaren Schubdüsenglocke enthält die erste Betätigungseinrichtung einen Aktuator und eine von dem Aktuator angetriebene und mit dem Auslegerarm im Sinne einer Schwenkbewegung desselben gekoppelte, in ihrer wirksamen Länge veränderbare Spindelstrebe.

Gemäß einer anderen bevorzugten Ausführungsform enthält die erste Betätigungseinrichtung einen Aktuator und von dem Aktuator angetriebene und mit dem Auslegerarm im Sinne einer Schwenkbewegung desselben gekoppelte Zugkabel sowie eine gegen den Zug der Zugkabel auf den Auslegerarm wirkende Federspeichereinrichtung.

Gemäß einer bevorzugten Ausführungsform der Erfindung ist es vorgesehen, dass die zweite Betätigungseinrichtung einen Aktuator, eine von dem Aktuator angetriebene Seiltrommel und ein im Sinne eines Transports desselben auf die Seiltrommel gewickeltes und mit dem zweiten Teil der Schubdüsenglocke gekoppeltes Zugkabel umfasst. Von diesem Zugkabel sind vorzugsweise mehrere über den Umfang der Schubdüsenglocke verteilt vorgesehen.

Weiterhin kann gemäß einer bevorzugten Ausführungsform der Erfindung vorgesehen sein, dass die erste und/oder zweite Betätigungseinrichtung einen den ersten Teil der Schubdüsenglocke in Umfangsrichtung umgebenden, drehbar angeordneten und von einem Aktuator im Sinne einer Drehung desselben antreibbaren Sammelring und um den Sammelring herumgelegte und beim Drehen desselben in ihrer wirksamen Länge veränderbare Zugkabel enthält, die mit den Auslegerarmen bzw. dem zweiten Teil der Schubdüsenglocke zu deren Betätigung gekoppelt sind.

Vorzugsweise ist ein zentraler Antrieb bzw. ein zentraler Aktuator für den Sammelring vorgesehen. Dieser zentrale Antrieb bzw. Aktuator kann insbesondere redundant vorgesehen sein.

Vorzugsweise sind die Auslegerarme als sich von ihrem ersten Ende zu ihrem zweiten Ende hin verjüngende Dreieckslenker ausgebildet.

Gemäß einer bevorzugten Weiterbildung des erfindungsgemäßen Raketentriebwerks mit ausfahrbaren Schubdüsenglocke sind zwischen den ersten Teil und den zweiten Teil der Schubdüsenglocke gekoppelte Führungseinrichtungen für eine Längsführung des zweiten Teils der Schubdüsenglocke auf einem letzten Teil der Ausfahrbewegung von der Stauposition in die Betriebsposition vorgesehen.

Hierbei können die Führungseinrichtungen am vorderen Ende des zweiten Teils der Schubdüsenglocke angebrachte Führungsrollen oder Gleitstücke und an einer Supportstruktur an dem ersten Teil der Schubdüsenglocke angebrachte Führungsschienen zur Aufnahme und Führung der Führungsrollen oder Gleitstücke enthalten.

Im folgenden werden Ausführungsbeispiele der Erfindung anhand der Zeichnung erläutert.

Es zeigt:
- Figur 1a) und b): eine perspektivische, teilweise geschnittene Ansicht eines Raketentriebwerks mit einer ausfahrbaren Schubdüsenglocke in einer Stauposition I und einer Betriebsposition II gemäß einem ersten Ausführungsbeispiel der Erfindung;
- Figur 2: eine vergrößerte perspektivische, teilweise geschnittene Teilansicht des in Figur 1 dargestellten ersten Ausführungsbeispiels des erfindungsgemäßen Raketentriebwerks mit der ausfahrbaren Schubdüsenglocke in der Stauposition I;
- Figur 3: eine perspektivische, teilweise geschnittene Ansicht eines Teils einer ausfahrbaren Schubdüsenglocke eines Raketentriebwerks zusammen mit einem Ausfahrmechanismus in Stauposition I gemäß einem zweiten Ausführungsbeispiel der Erfindung;
- Figur 4a) bis c): drei unterschiedliche Phasen bei der Ausfahrbewegung aus der Stauposition I in die Betriebsposition II für das in Figur 1 dargestellte erste Ausführungsbeispiel des erfindungsgemäßen Raketentriebwerks mit ausfahrbaren Schubdüsenglocke in einer teilweise geschnittenen seitlichen Teilansicht; und
- Figur 5: eine Detaildarstellung einer Verriegelungseinrichtung zur Verriegelung der beiden Teile der ausfahrbaren Schubdü- senglocke des ersten Ausführungsbeispiels der Erfindung in der Betriebsposition II.

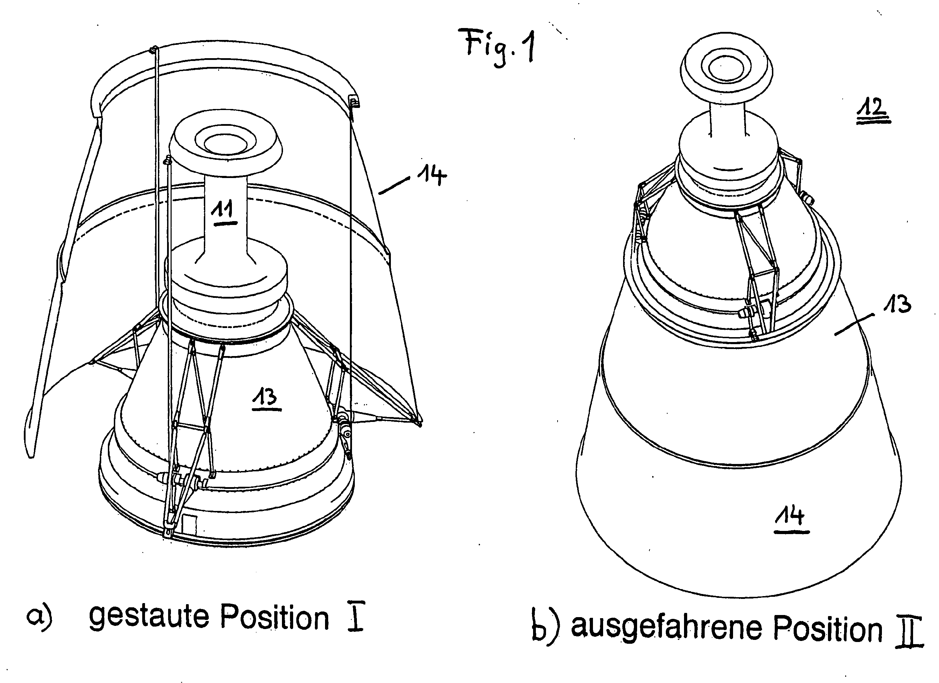

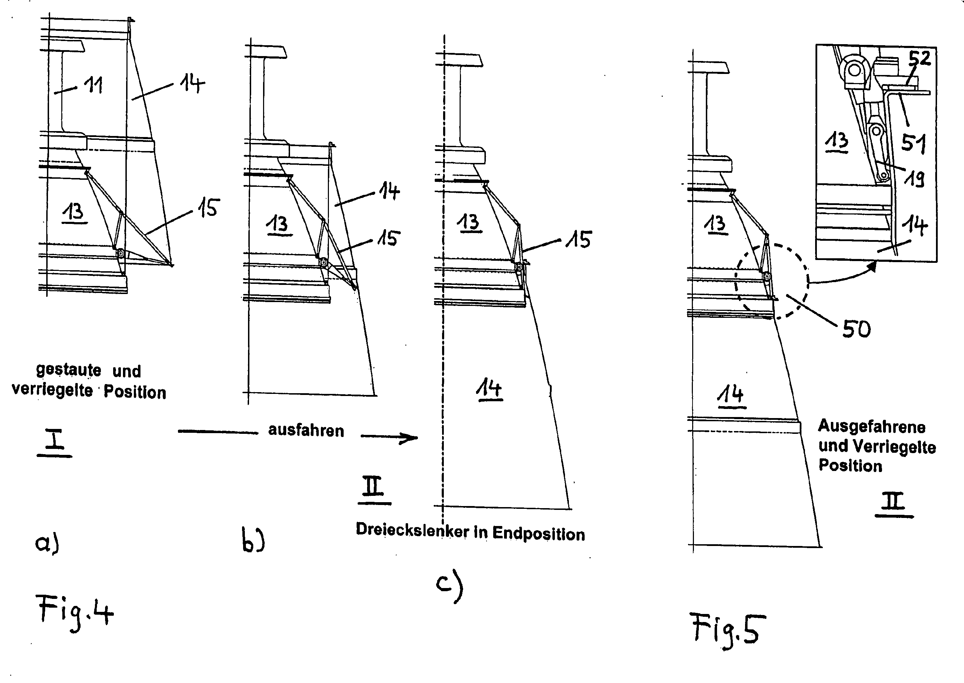

Bei den in den Figuren dargestellten Ausführungsbeispielen eines Raketentriebwerks eines Luft- oder Raumfahrzeugs mit einer ausfahrbaren Schubdüsenglocke bedeutet das Bezugszeichen 11 den Brennkammerhals eines selbst nicht dargestellten Motors eines Raketentriebwerks für ein Luft- oder Raumfahrzeug. An dem Brennkammerhals 11 ist eine insgesamt mit dem Bezugszeichen 12 bezeichnete Schubdüsenglocke angeordnet. Diese dient in bekannter Weise dazu, die von dem Brennkammerhals 11 mit hoher Geschwindigkeit nach rückwärts ausströmenden Brenngase in kontrollierter Weise so zu expandieren, dass ihre Geschwindigkeit im Sinne einer maximalen Impulsübertragung auf das Luft- oder Raumfahrzeug zum Zwecke dessen Vortriebs herabgesetzt wird. Hierzu ist ein beträchtliches Expansionsverhältnis zwischen dem Querschnitt des Brennkammerhalses 11, aus welchem die Brenngase in die Schubdüsenglocke 12 an deren vorderen Ende eintreten, und der Querschnittsfläche der rückwärtigen Öffnung der Schubdüsenglocke 12, wo die Brenngase austreten, erforderlich. Dies bedeutet unter Berücksichtigung einer optimalen Kurvenform der Schubdüsenglocke 12 eine beträchtliche Länge derselben. Damit der Raumbedarf für die Schubdüsenglocke 12 in Grenzen gehalten wird, ist diese daher in geteilter und ausfahrbarer Form vorgesehen. Nämlich umfasst die Schubdüsenglocke 12 einen an dem Brennkammerhals 11 festangeordneten ersten Teil 13 und einen gegenüber dem ersten Teil 13 beweglich angeordneten zweiten Teil 14, die jeweils eine bezüglich der Flugrichtung nach hinten divergente, quasi-konische Form aufweisen, wie insbesondere aus den Figuren 1 und 4 ersichtlich ist.

Der zweite Teil 14 der Schubdüsenglocke 12 ist in einer vorderen Stauposition I, die jeweils in den Figuren 1a), 2, 3 und 4a) dargestellt ist, den ersten Teil 13 der Schubdüsenglocke 12 umgebend näher am Raketenmotor, also bezüglich der Flugrichtung weiter vom befindlich und in einer hinteren Betriebsposition II, die in den Figuren 1b), 4c) und 5 dargestellt ist, den ersten Teil 13 der Schubdüsenglocke 12 fortsetzend weiter weg vom Raketenmotor, also bezüglich der Flugrichtung weiter hinten angeordnet. In dieser hinteren Betriebsposition II ist der zweite Teil 14 der Schubdüsenglocke 12 mittels eines in Figur 5 dargestellten, insgesamt mit dem Bezugszeichen 50 bezeichneten Verriegelungsmechanismus fest verriegelbar.

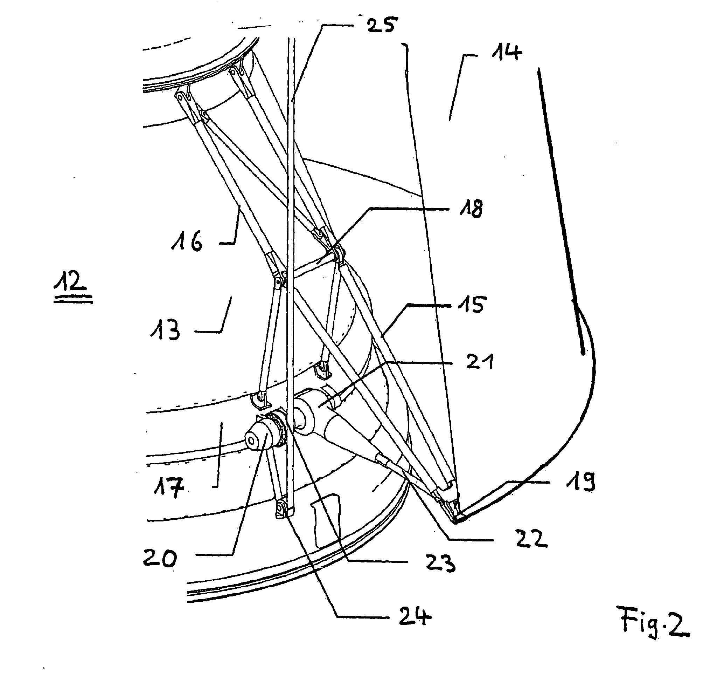

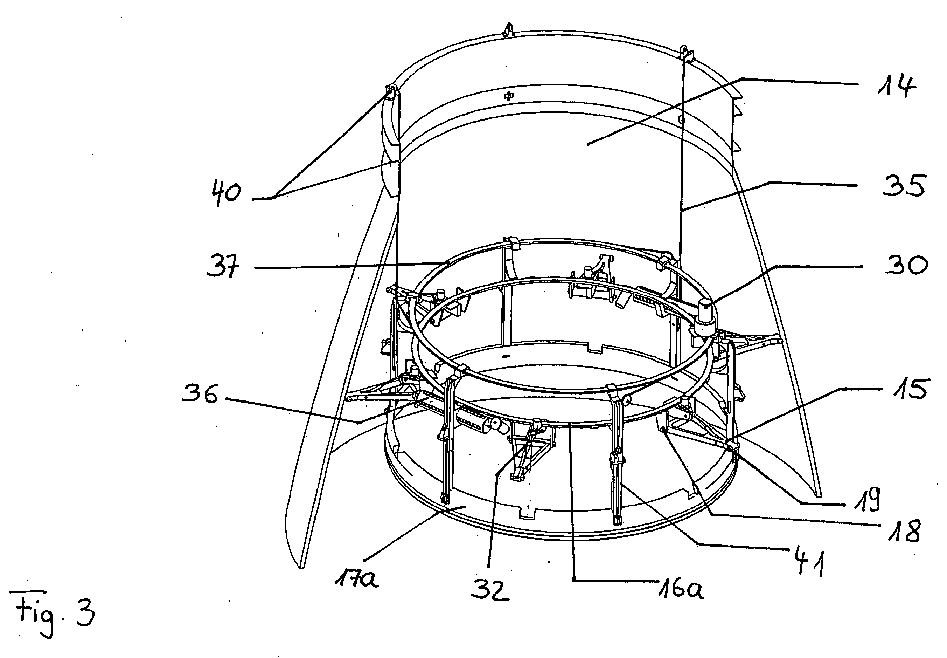

Zum Ausfahren des zweiten Teils 14 der Schubdüsenglocke 12 aus der Stauposition I in die Betriebsposition II dient ein Ausfahrmechanismus, der mehrere über den Umfang der Schubdüsenglocke 12 verteilte, nämlich bei dem in den Figuren 1 und 2 dargestellten Ausführungsbeispiel 3 Stück, bei dem in Figur 3 dargestellten Ausführungsbeispiel 6 Stück, zwischen den ersten Teil 13 und den zweiten Teil 14 der Schubdüsenglocke 12 gekoppelte schwenkbare Auslegerarme 15 umfasst. Diese sind an einem ersten Ende mit einer an der Außenseite des ersten Teils 13 der Schubdüsenglocke 12 vorgesehenen Supportstruktur 16, 17 bzw. 16a, 17a gelenkig verbunden. Diese gelenkige Verbindung wird durch eine in Umfangsrichtung der Schubdüsenglocke 12 verlaufende Gelenkachse 18 gebildet, so dass die Auslegerarme 15 in einer die Längsachse des Raketentriebwerks enthaltenden Radialebene über einen vorgegebenen Bereich schwenkbar sind.

Wie in den Figuren 4a) bis c) dargestellt ist, erfolgt beim Heranschwenken der Auslegerarme 15 eine Verringerung des radialen Abstandes von deren zweiten Ende zum ersten Teil 13 der Schubdüsenglocke 12 hin, so dass der zweite Teil 14 der Schubdüsenglocke 12 beim Heranschwenken der Auslegerarme 15 an den ersten Teil 13 der quasi-konischen Form des zweiten Teils 14 folgend aus der in Figur 4a) gezeigten Stauposition I in die Figur 4c) gezeigte Betriebsposition II ausfahrbar ist. Dazu weisen die Auslegerarme 15 an ihrem den zweiten Teil 14 der Schubdüsenglocke 12 zugewandten zweiten Ende ein Gleit- oder Rollelement 19 auf, welches beim Ausfahren des zweiten Teils 14 eine Gleit- oder Rollbewegung gegenüber der Innenseite des zweiten Teils 14 der Schubdüsenglocke 12 vollzieht.

Zum Heranschwenken der Auslegerarme 15 ist eine mit diesen gekoppelte erste Betätigungseinrichtung und zum Bewegen des zweiten Teils 14 der Schubdüsenglocke 12 aus der Stauposition I in die Betriebsposition II ist eine damit gekoppelte zweite Betätigungseinrichtung vorgesehen.

Bei dem in Figur 2 im Detail näher dargestellten ersten Ausführungsbeispiel umfasst die genannte erste Betätigungseinrichtung einen Aktuator 20, etwa in Form eines Schrittmotors mit einem nachgeschalteten Planetengetriebe, und eine Spindelstrebe 22, die über ein zwischengeschaltetes Getriebe 21 mit dem Aktuator 20 zum Antrieb durch diesen und andererseits mit dem Auslegerarm 15 nahe dessen zweiten Ende gekoppelt ist. Die Spindelstrebe 22 ist durch Antrieb über den Aktuator 20 im Sinne einer Schwenkbewegung des Auslegerarms 15 in ihrer wirksamen Länge veränderbar.

Bei dem in Figur 3 dargestellten zweiten Ausführungsbeispiel der erfindungsgemäßen Schubdüsenglocke enthält die zum Schwenken der Auslegerarme 15 vorgesehene erste Betätigungseinrichtung wiederum einen Aktuator 30, etwa in Form eines Schrittmotors mit einem nachgeschalteten Getriebe, und mit dem Auslegerarm 15 im Sinne einer Schwenkbewegung desselben gekoppelte Zugkabel 32, die durch den Aktuator 30 herangezogen und ein Heranschwenken des Auslegerarms 15 gegen eine auf diesen wirkende Federspeichereinrichtung 36 enthält. Die Drehbewegung des Aktuators 30 wird mittels eines den ersten Teil 13 der Schubdüsenglocke 12 in Umfangsrichtung umgebenden, drehbar angeordneten Sammelrings 37, um den die Zugkabel 32 herumgelegt und beim Drehen desselben in ihrer wirksamen Länge veränderbar sind, übertragen.

Bei dem in Figur 2 dargestellten Ausführungsbeispiel sind für die Bewegung des zweiten Teils 14 der Schubdüsenglocke 12 aus der Stauposition I in die Betriebsposition II als zweite Betätigungseinrichtung eine von dem Aktuator 20 angetriebene Seiltrommel oder Kabeltrommel 23 und zum Zwecke eines Antriebs bzw. Transports auf die Seiltrommel 23 gewickelte, vorzugsweise gleichmäßig über den Umfang der Schubdüsenglocke 12 verteilte Zugkabel 25 vorgesehen, die mit dem freien Ende im vorderen Bereich mit den zweiten Teil 14 der Schubdüsenglocke 12 gekoppelt sind. Jedes Zugkabel 25 wird über eine Umlenkrolle 24 in Richtung zur Vorderseite des zweiten Teils 14 der Schubdüsenglocke 12 umgelenkt. Bei Betätigung des Aktuators 20 wird somit einerseits über das Getriebe 21 und die Spindelstrebe 22 ein Heranschwenken des Auslegerarms 15 und andererseits über die Seiltrommel 23 und die Zugkabel 25 eine translatorische Bewegung des zweiten Teils 14 der Schubdüsenglocke 12 bewirkt. Zur Synchronisierung der beiden Bewegungen umfasst die Seiltrommel 23 einen integrierten Mechanismus zur Längenkompensation.

Bei dem in Figur 3 dargestellten zweiten Ausführungsbeispiel sind mit dem Sammelring 37 um diesen herumgelegte und beim Drehen desselben in ihrer wirksamen Länge veränderbare, vorzugsweise gleichmäßig über den Umfang der Schubdüsenglocke 12 verteilte Zugkabel 35 vorgesehen, die an ihrem freien Ende mit einem vorderen Bereich des zweiten Teils 14 der Schubdüsenglocke 12 gekoppelt sind. Beim Drehen des Sammelrings mittels des Aktuators 30 wird somit einerseits ein Heranschwenken der Auslegerarme 15 über die Zugkabel 32 und andererseits eine translatorische Bewegung des zweiten Teils 14 der Schubdüsenglocke 12 über die Zugkabel 35 bewirkt. Auch hier sind Mittel vorgesehen, um die beiden genannten Bewegungen miteinander zu synchronisieren. Der Aktuator 30 bildet somit einen zentralen Antrieb für den Sammelring 37. Vorzugsweise ist der Aktuator 30 redundant vorgesehen.

Bei den beschriebenen Ausführungsbeispielen sind, wie insbesondere aus den Figuren 2 und 3 deutlich ersichtlich ist, die Auslegearme 15 in Form von Dreieckslenkern ausgebildet, die sich von ihrem ersten, also an der Gelenkachse 18 gelagerten Ende zu ihrem zweiten, also dem der Innenseite des zweiten Teils 14 der Schubdüsenglocke 12 zugewandten Ende hin verjüngend ausgebildet sind.

Für eine Längsführung des zweiten Teils 14 der Schubdüsenglocke 12 auf dem letzten Teil der Ausfahrbewegung von der Stauposition I in die Betriebsposition II sind zwischen den ersten Teil 13 und den zweiten Teil 14 der Schubdüsenglocke 12 gekoppelte Führungseinrichtungen vorgesehen, die an der Innenseite des vorderen Endes des zweiten Teils 14 der Schubdüsenglocke 12 angebrachte Führungsrollen oder Gleitstücke 40 und an der Supportstruktur 16a, 17a an der Außenseite des ersten Teils 13 der Schubdüsenglocke 12 angebrachte Führungsschienen 41, welche der Aufnahme und Führung der Führungsrollen oder Gleitstücke 40 dienen, umfassen.

Zur Verriegelung des zweiten Teils 14 der Schubdüsenglocke 12 an dem ersten Teil 13 in der ausgefahrenen Betriebsposition II ist eine in Figur 5 näher dargestellte Verriegelungseinrichtung 50 dargestellt, die einen an dem zweiten Teil 14 vorgesehenen Anschlag 51 und eine an dem ersten Teil 13 vorgesehene Klinke 52 umfasst. Nach dem Erreichen der Betriebsposition II wird der Anschlag 51 mittels der Klinke 52 verriegelt, so dass der zweite Teil 14 der Schubdüsenglocke 12 gegen eine Bewegung aus der Betriebsposition II nach vorne gesichert ist, wie sie durch den Schub der austretenden Brenngase hervorgerufen würde.

## Patentansprüche

1. Raketentriebwerk eines Luft- oder Raumfahrzeugs mit einer ausfahrbaren Schubdüsenglocke, welche einen am Motor des Raketentriebwerks fest angeordneten, eine quasi-konische Form aufweisenden ersten Teil (13) mit kleineren Durchmesser und einen gegenüber dem ersten Teil (13) beweglich angeordneten eine quasi-konische Form aufweisenden zweiten Teil (14) mit größerem Durchmesser umfasst, wobei der zweite Teil (14) in einer vorderen Stauposition (I) den ersten Teil (13) der Schubdüsenglocke (12) umgebend näher am Raketenmotor befindlich ist und in einer hinteren Betriebsposition (II) den ersten Teil (13) fortsetzend weiter vom Raketenmotor weg angeordnet ist, und mit einem Ausfahrmechanismus (15, 19, 20, 21, 22, 23, 24, 25; 15, 19, 30, 35, 36, 37, 38, 39) zum Ausfahren des zweiten Teils (14) der Schubdüsenglocke (12) aus der Stauposition (I) in die Betriebsposition (II), wobei der Ausfahrmechanismus (15, 19, 20, 21, 22, 24, 25; 15, 19, 30, 35, 36, 37, 38, 39) mehrere über den Umfang der Schubdüsenglocke (12) verteilte, zwischen den ersten Teil (13) und den zweiten Teil (14) der Schubdüsenglocke (12) gekoppelte schwenkbare Auslegerarme (15) umfasst, die an einem ersten Ende mit einer an der Außenseite des ersten Teils (13) der Schubdüsenglocke (12) vorgesehenen Supportstruktur (16, 17; 16a, 17a) gelenkig verbunden sind, **dadurch gekennzeichnet, dass** die Auslegerarme (15) an ihrem zweiten Ende gegenüber der Innenseite des zweiten Teils (14) der Schubdüsenglocke (12) verschiebbar angeordnet und unter Verringerung des radialen Abstandes ihres zweiten Endes zum ersten Teil (13) der Schubdüsenglocke (12) schwenkbar sind, so dass der zweite Teil (14) der Schubdüsenglocke (12) beim Heranschwenken der Auslegerarme (15) an den ersten Teil (13) der Schubdüsenglocke (12) der quasi-konischen Form des zweiten Teils (14) der Schubdüsenglocke (12) folgend in Richtung der hinteren Betriebsposition (II) ausfahrbar ist, wobei eine mit den Auslegerarmen (15) gekoppelte erste Betätigungseinrichtung (20, 21, 22; 30, 32, 36) zum Heranschwenken der Auslegerarme (15) und eine mit dem zweiten Teil (14) der Schubdüsenglocke (12) gekoppelte zweite Betätigungseinrichtung (20, 23, 24, 25; 30, 35,37) zum Bewegen derselben in Längsrichtung des Raketentriebwerks aus der Stauposition (I) in die Betriebsposition (II) vorgesehen ist.

2. Raketentriebwerk nach Anspruch 1, **dadurch gekennzeichnet, dass** die Auslegerarme (15) an ihrem dem zweiten Teil (14) der Schubdüsenglocke (12) zugewandten Ende ein Gleit- oder Rollelement (19) aufweisen, welches beim Ausfahren des zweiten Teils (14) der Schubdüsenglocke (12) unter Heranschwenken der Auslegerarme (15) für eine Gleit- oder Rollbewegung gegenüber der Innenseite des zweiten Teils (14) der Schubdüsenglocke (12) vorgesehen ist.

3. Raketentriebwerk nach Anspruch 1 oder 2, **dadurch gekennzeichnet, dass** die Auslegerarme (15) an ihrem ersten Ende um eine in Umfangsrichtung der Schubdüsenglocke (12) angeordnete Gelenkachse (18) gelagert und in einer die Längsachse des Raketentriebwerks enthaltenden Radialebene schwenkbar sind.

4. Raketentriebwerk nach den Ansprüchen 1 bis 3, **dadurch gekennzeichnet, dass** die erste Betätigungseinrichtung einen Aktuator (20) und eine von dem Aktuator (20) angetriebene und mit dem Auslegerarm (15) im Sinne einer Schwenkbewegung desselben gekoppelte, in ihrer wirksamen Länge veränderbare Spindelstrebe (22) enthält.

5. Raketentriebwerk nach den Ansprüchen 1 bis 3, **dadurch gekennzeichnet, dass** die erste Betätigungseinrichtung einen Aktuator (30) und von dem Aktuator (30) angetriebene und mit dem Auslegerarm (15) im Sinne einer Schwenkbewegung desselben gekoppelte Zugkabel (32) sowie eine gegen den Zug der Zugkabel (32) auf den Auslegerarm (15) wirkende Federspeichereinrichtung (36) enthält.

6. Raketentriebwerk nach den Ansprüchen 1 bis 5, **dadurch gekennzeichnet, dass** die zweite Betätigungseinrichtung einen Aktuator (20), eine von dem Aktuator (20) angetriebene Seiltrommel (23) und ein im Sinne eines Transports desselben auf die Seiltrommel (23) gewickeltes und mit dem zweiten Teil (14) der Schubdüsenglocke (12) gekoppeltes Zugkabel (25) enthält.

7. Raketentriebwerk nach den Ansprüchen 1 bis 5, **dadurch gekennzeichnet, dass** die die erste und/oder zweite Betätigungseinrichtung einen den ersten Teil (13) der Schubdüsenglocke (12) in Umfangsrichtung umgebenden, drehbar angeordneten und von einem Aktuator (30) im Sinne einer Drehbewegung desselben antreibbaren Sammelring (37) und um den Sammelring (37) herumgelegte und beim Drehen desselben in ihrer wirksamen Länge veränderbare Zugkabel (32, 35) enthält, die mit den Auslegerarmen (15) bzw. dem zweiten Teil (14) der Schubdüsenglocke (12) zu deren Betätigung gekoppelt sind.

8. Raketentriebwerk nach Anspruch 7, **dadurch gekennzeichnet, dass** ein zentraler Antrieb (30) für den Sammelring (37) vorgesehen ist.

9. Raketentriebwerk nach einem der Ansprüche 1 bis 8, **dadurch gekennzeichnet, dass** die Auslegerarme (15) als sich von ihrem ersten Ende zu ihrem zweiten Ende hin verjüngende Dreieckslenker ausgebildet sind.

10. Raketentriebwerk nach einem der Ansprüche 1 bis 9, **dadurch gekennzeichnet, dass** zwischen den ersten Teil (13) und den zweiten Teil (14) der Schubdüsenglocke (12) gekoppelte Führungseinrichtungen (40, 41) für eine Längsführung des zweiten Teils (14) der Schubdüsenglocke (12) auf einem letzten Teil der Ausfahrbewegung von der Stauposition (I) in die Betriebsposition (II) vorgesehen sind.

11. Raketentriebwek nach Anspruch 10, **dadurch gekennzeichnet, dass** die Führungseinrichtungen am vorderen Ende des zweiten Teils (14) der Schubdüsenglocke (12) angebrachte Führungsrollen oder Gleitstücke (40) und an einer Supportstruktur (16a, 17a) an dem ersten Teil (13) der Schubdüsenglocke (12) angebrachte Führungsschienen (41) zur Aufnahme und Führung der Führungsrollen oder Gleitstücke (40) enthalten.

## Claims

1. A rocket propulsion unit of an aircraft or spacecraft with an extensible thrust nozzle cone, which comprises a first part (13) of a quasi-conical shape and a smaller diameter, which is disposed in a fixed manner on the motor of the rocket propulsion unit, and a second part (14) of a quasi-conical shape and a larger diameter, which is disposed movably relative to the first part (13), wherein the second part (14), in a front stowage position (I) surrounding the first part (13) of the thrust nozzle cone (12), is situated closer to the rocket motor and, in a rear operating position (II) as a continuation of the first part (13), is disposed further away from the rocket motor, and with an extension mechanism (15, 19, 20, 21, 22, 23, 24, 25; 15, 19, 30, 35, 36, 37, 38, 39) for extending the second part (14) of the thrust nozzle cone (12) out of the stowage position (I) into the operating position (II), wherein the extension mechanism (15, 19, 20, 21, 22, 23, 24, 25; 15, 19, 30, 35, 36, 37, 38, 39) includes a plurality of pivotable bracket arms (15), which are distributed over the circumference of the thrust nozzle cone (12), coupled between the first part (13) and the second part (14) of the thrust nozzle cone (12) and hinge-connected at a first end to a support structure (16, 17; 16a, 17a) provided on the outside of the first part (13) of the thrust nozzle cone (12), **characterized in that** the bracket arms (15) at their second end are disposed displaceably relative to the inside of the second part (14) of the thrust nozzle cone (12) and are pivotable with a simultaneous reduction of the radial distance of their second end from the first part (13) of the thrust nozzle cone (12), so that the second part (14) of the thrust nozzle cone (12) during swivelling of the bracket arms (15) towards the first part (13) of the thrust nozzle cone (12) following the quasi-conical shape of the second part (14) of the thrust nozzle cone (12) is extensible in the direction of the rear operating position (II), wherein a first actuating device (20, 21, 22; 30, 32, 36) coupled to the bracket arms (15) is provided for swivelling-in of the bracket arms (15) and a second actuating device (20, 23, 24, 25; 30, 35, 37) coupled to the second part (14) of the thrust nozzle cone (12) is provided for moving the second part (14) in the longitudinal direction of the rocket propulsion unit out of the stowage position (I) into the operating position (II).

2. A rocket propulsion unit according to claim 1, **characterized in that** the bracket arms (15) on their end facing the second part (14) of the thrust nozzle cone (12) have a sliding or rolling element (19), which during extension of the second part (14) of the thrust nozzle cone (12) with simultaneous swivelling-in of the bracket arms (15) is provided for a sliding or rolling movement relative to the inside of the second part (14) of the thrust nozzle cone (12).

3. A rocket propulsion unit according to claim 1 or 2, **characterized in that** the bracket arms (15) are supported at their first end about an articulated axle (18) disposed in circumferential direction of the thrust nozzle cone (12) and are pivotable in a radial plane that contains the longitudinal axis of the rocket propulsion unit.

4. A rocket propulsion unit according to claims 1 to 3, **characterized in that** the first actuating device includes an actuator (20) and a spindle strut (22), which is driven by the actuator (20) and coupled to the bracket arm (15) in the sense of a swivelling movement thereof and the effective length of which is variable.

5. A rocket propulsion unit according to claims 1 to 3, **characterized in that** the first actuating device includes an actuator (30) and tension cables (32), which are driven by the actuator (30) and coupled to the bracket arm (15) in the sense of a swivelling movement thereof, as well as a spring energy storage device (36), which acts counter to the tension of the tension cables (32) upon the bracket arm (15).

6. A rocket propulsion unit according to claims 1 to 5, **characterized in that** the second actuating device includes an actuator (20), a cable drum (23) driven by the actuator (20), and a tension cable (25) wound in the direction of transport thereof onto the cable drum (23) and coupled to the second part (14) of the thrust nozzle cone (12).

7. A rocket propulsion unit according to claims 1 to 5, **characterized in that** the first and/or second actuating device includes a rotatably disposed collecting ring (37), which surrounds the first part (13) of the thrust nozzle cone (12) in the circumferential direction can be set in rotation by an actuator (30), as well as tension cables (32, 35), which are laid around the collecting ring (37) and upon rotation thereof are variable in their effective length and which are coupled to the bracket arms (15) and/or the second part 14) of the thrust nozzle cone (12) for actuation thereof.

8. A rocket propulsion unit according to claim 7, **characterized in that** a central drive (30) is provided for the collecting ring (37).

9. A rocket propulsion unit according to one of claims 1 to 8, **characterized in that** the bracket arms (15) take the form of triangular guide rods, which taper from their first end in the direction of their second end.

10. A rocket propulsion unit according to one of claims 1 to 9, **characterized in that** guide devices (40, 41) coupled between the first part (13) and the second part (14) of the thrust nozzle cone (12) are provided for longitudinal guidance of the second part (14) of the thrust nozzle cone (12) along a last part of the extension movement out of the stowage position (I) into the operating position (II).

11. A rocket propulsion unit according to claim 10, **characterized in that** the guide devices include guide rollers or sliding blocks (40), which are provided on the front end of the second part (14) of the thrust nozzle cone (12), and guide rails (41), which are provided on a support structure (16a, 17a) on the first part (13) of the thrust nozzle cone (12), for receiving and guiding the guide rollers or sliding blocks (40).

## Revendications

1. Moteur-fusée d'un aéronef ou d'un engin spatial comportant une tuyère d'éjection déployable qui comprend une première partie (13) de diamètre inférieur ayant une forme quasi-conique et fixée au moteur de la propulsion par moteur-fusée et une deuxième partie (14) de diamètre supérieur ayant une forme quasi-conique et mobile par rapport à la première partie (13), dans lequel la deuxième partie (14) entoure la première partie (13) de la tuyère d'éjection (12) et est située plus près du moteur-fusée dans une position d'arrimage avant (I) alors que dans une position de fonctionnement arrière (II) elle prolonge la première partie (13) et est éloignée du moteur-fusée, et comportant un mécanisme de sortie (15, 19, 20, 21, 22, 23, 24, 25; 15, 19, 30, 35, 36, 37, 38, 39) pour faire sortir la deuxième partie (14) de la tuyère d'éjection (12) de la position d'amarrage (I) dans une position de fonctionnement (II), le mécanisme de démarrage (15, 19, 20, 21, 22, 23, 24, 25 ; 15, 19, 30, 35, 36, 37, 38, 39) comprenant plusieurs bras leviers pivotants (15) répartis sur la périphérie de la tuyère d'éjection (12) et couplés entre la première partie (13) et la deuxième partie (14) de la tuyère (12), et dont une première extrémité, est reliée de manière articulée, à une structure de support (16, 17 ; 16a, 17a) prévue sur la face extérieure de la première partie (13) de la tuyère d'éjection (12),
**caractérisé en ce que**
les bras leviers (15) sont mobiles à leur deuxième extrémité par rapport à la face intérieure de la deuxième partie (14) de la tuyère d'éjection (12) et sont pivotants lorsque la distance radiale de leur deuxième extrémité diminue par rapport à la première partie (13) de la tuyère d'éjection (12) de telle sorte que la deuxième partie (14) de la tuyère d'éjection (12) soit déployable ensuite en direction de la position de fonctionnement arrière (II) lorsque les bras leviers (15) pivotent de la deuxième partie (14) sur la première partie (13) de la tuyère d'éjection (12) de forme quasi-conique avec un premier système d'actionnement (20, 21, 22 ; 30, 32, 36) couplé aux bras leviers (15) prévu pour faire pivoter les bras leviers (15), et avec un deuxième système d'actionnement (20, 23, 24, 25 ; 30, 35, 37) couplé à la deuxième partie (14) de la tuyère (12) prévu pour déplacer celle-ci dans la direction longitudinale de la propulsion par moteur-fusée depuis la position d'arrimage (I) jusque dans la position de fonctionnement (II).

2. Propulsion par moteur-fusée selon la revendication 1,
**caractérisée en ce que**
les bras leviers (15) présentent, à leur extrémité en regard de la deuxième partie (14) de la tuyère d'éjection (12), un élément coulissant ou roulant (19) prévu pour se déplacer en coulissement ou en roulement par rapport à la face intérieure de la deuxième partie (14) de la tuyère (12) lorsque la deuxième partie (14) de la tuyère (12) sort suite au pivotement des bras leviers (15).

3. Propulsion par moteur-fusée selon la revendication 1 ou 2,
**caractérisée en ce que**
les bras leviers (15) sont placés, à leur première extrémité, autour d'un axe d'articulation (18) orienté dans la direction périphérique de la tuyère d'éjection (12) et peuvent pivoter dans un plan radial contenant l'axe longitudinal de la propulsion par moteur-fusée.

4. Propulsion par moteur-fusée selon les revendications 1 à 3,
**caractérisée en ce que**
le premier système d'actionnement contient un actionneur (20) et une contre-fiche d'arbre (22) de longueur efficace variable entraînée par l'actionneur (20) et couplée au bras levier (15) dans le sens d'un mouvement de pivotement de celui-ci.

5. Propulsion par moteur-fusée selon les revendications 1 à 3,
**caractérisée en ce que**
le premier système d'actionnement contient un actionneur (30) et des câbles de traction (32) entraînés par l'actionneur (3) et couplés au bras levier (15) dans le sens d'un mouvement de pivotement de celui-ci, ainsi qu'un système à mémoire élastique (36) agissant sur le bras levier (15) sous la traction des câbles de traction (32).

6. Propulsion par moteur-fusée selon les revendications 1 à 5,
**caractérisée en ce que**
le deuxième système d'actionnement contient un actionneur (20), un tambour de treuil (23) entraîné par l'actionneur (20) et un câble de traction (25) enroulé sur le tambour de levage (23) dans le sens d'un transport de celui-ci et couplé à la deuxième partie (14) de la tuyère d'éjection (12).

7. Propulsion par moteur-fusée selon les revendications 1 à 5,
**caractérisée en ce que**
le premier et/ou deuxième système d'actionnement contient un collecteur annulaire (37) tournant entourant la première partie (13) de la tuyère d'éjection (12) dans la direction périphérique, et pouvant être actionné par un actionneur (30) dans le sens d'une rotation de celui-ci, et des câbles de traction (32, 35), placés autour du collecteur annulaire (37) et variables en longueur efficace lors de la rotation de celui-ci, sont couplés aux bras leviers (15) ou à la deuxième partie (14) de la tuyère d'éjection (12) pour les actionner.

8. Propulsion par moteur-fusée selon la revendication 7,
**caractérisée en ce qu'**
un entraînement central (30) est prévu pour le collecteur annulaire (37).

9. Propulsion par moteur-fusée selon l'une des revendications 1 à 8,
**caractérisée en ce que**
les bras leviers (15) sont des bras triangulaires qui se rétrécissent depuis leur première extrémité jusqu'à leur deuxième extrémité.

10. Propulsion par moteur-fusée selon l'une des revendications 1 à 9,
**caractérisée en ce que**
des systèmes de guidage (40, 41) couplés entre la première partie (13) et la deuxième partie (14) de la tuyère d'éjection (12) sont prévus pour guider longitudinalement la deuxième partie (14) de la tuyère (12) sur une dernière partie du mouvement de sortie depuis la position d'arrimage (I) jusqu'à la position de fonctionnement (II).

11. Propulsion par moteur-fusée selon la revendication 10,
**caractérisée en ce que**
les systèmes de guidage contiennent des rouleaux de guidage ou pièces coulissantes (40) monté(e)s à l'extrémité avant de la deuxième partie (14) de la tuyère d'éjection (12) et des rails de guidage (41) montés sur une structure de support (16a, 17a) sur la première partie (13) de la tuyère d'éjection (12) pour recevoir et guider les rouleaux de guidage ou pièces coulissantes (40).
